(19) Europäisches Patentamt

European Patent Office

Office européen des brevets

(11) **EP 1 362 681 B1**

(12) **EUROPÄISCHE PATENTSCHRIFT**

(45) Veröffentlichungstag und Bekanntmachung des Hinweises auf die Patenterteilung:
**02.01.2004  Patentblatt 2004/01**

(51) Int Cl.7: **B29B 17/00**, B29B 13/10, B29B 7/42, C08J 11/06

(21) Anmeldenummer: **02012210.7**

(22) Anmeldetag: **04.06.2002**

(54) **Verfahren und Einrichtung zur Herstellung hochaktiver Gummipulver aus Gummiabfällen**

Method and apparatus for producing highly active rubber powder from rubber scrap

Procédé et dispositif pour la fabrication de poudre de caoutchouc à haute activité à partir de déchets de caoutchouc

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(43) Veröffentlichungstag der Anmeldung:
**19.11.2003  Patentblatt 2003/47**

(73) Patentinhaber:
• **Chemplast GmbH**
  **20354 Hamburg (DE)**
• **Deutsche Gumtec AG**
  **06108 Halle/Saale (DE)**

(72) Erfinder:
• **Balyberdin, Vladimir**
  **Stadt Moskau (RU)**
• **Gorelik, Roudolf**
  **Stadt Moskau (RU)**

(74) Vertreter: **Fleck, Thomas, Dr. Dipl.-Chem. et al**
**Raffay & Fleck**
**Patentanwälte**
**Geffckenstrasse 6**
**20249 Hamburg (DE)**

(56) Entgegenhaltungen:
WO-A-95/21047          WO-A-96/36470
FR-A- 2 574 698        US-A- 5 904 885

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf das Gebiet der Verarbeitung von Altreifen und Abfällen gummitechnischer Artikel auf der Basis von verschiedenen Kautschuken und ist für die Herstellung hochaktiver Gummipulver zwecks deren effektiven Wiederverwendung bestimmt.

Der Recycling-Prozess besteht im Wesentlichen aus zwei stufen:

1. Vorverarbeitung von Reifen und Abfällen gummitechnischer Artikel, um maximal textil- und metallkordfreie Gummistücke mit den Abmessungen von 10 bis 15 mm zu erhalten.

2. Endverarbeitung der erhaltenen Stücke, um für die Wiederverwendung maximal effektive Gummipulver zu erhalten.

Die Erfindung betrifft die zweite Stufe.

Es ist eine große Anzahl von Verfahren zur Verarbeitung von Altreifen und Abfällen gummitechnischer Artikel entweder durch mechanische Schlageinwirkung auf bis auf niedrige (kryogene) Temperaturen gekühlte Abfälle in Hammer-, Stift- und anderen Brechern (US-PS 3,718,284, B 02 C 11/08, veröff. 1978 und RU-PS 2 060 833, B 29 B 17/02, Priorität vom 30.11.1993, am 27.05.1996 veröff.) oder durch aufeinanderfolgende Schlag- und Schneideinwirkung bei einer Temperatur von 0 bis 60°C in Schreddern, geriffelten Walzen usw. bekannt (US-PS 3 923 256, B 02 C 23/14, veröff. 1975; RU-PS 2 076 045, B 29 B 17/00, Priorität vom 29.12.1990, am 27.03.1997 veröff.; RU-PS 2 057 013, B 29 B 17/00, Priorität vom 07.02.1994, am 27.03.1996 veröff.; RU-PS 2 128 115, B 29 B 17/00, 17/02, Priorität vom 04.04.1997, am 27.03.1999 veröff.; RU-PS 2 076 045, B 29 B 13/10, 17/00, Priorität vom 29.12.1990, am 27.03.1997 veröff.; DE-PS 37 17 571, B 02 C 18/24, 13/26, Priorität vom 25.05.1987, am 23.06.1988 veröff; DE-PS 44 25 049, B 29 B 17/00, Priorität vom 15.07.1994, am 18.01.1996 veröff; EP 0937742, Priorität vom 20.02.1998, US 27312 am 25.08.1999 veröff; EP 0972792, Priorität vom 15.07.1998, US 115975 am 19.01.2000 veröff).

Diese Verfahren ermöglichen es nicht, Gummipulver mit einer hohen spezifischen geometrischen Oberfläche herzustellen, was ein Kriterium der Aktivität der Pulver ist, trotz der Möglichkeit der Herstellung von sehr fein gemahlenen Pulvern. Die maximale spezifische geometrische Fläche der Pulver mit einer Teilchengröße von 20 µm übersteigt 0,12 m$^2$/g nicht.

Es ist eine Reihe von Einrichtungen zur Herstellung von Pulvern mit einer verhältnismäßig hohen physischen und chemischen Aktivität aus vulkanisierten Gummiabfällen bekannt. Insbesondere wird in RU-PS 2 038 214, B 29 B 17/00, Priorität vom 29.08.1991, am 27.06.1995 veröff., Bull. Nr. 18, DE-PS 4228630, eine Einrichtung angegeben, die Zweischneckenwellen mit drei Nockenzonen zur Zerkleinerung einer Separierung und einer Kühlung aufweist. Gemäß der zitierten Druckschrift erfolgt die Zerkleinerung des Materials durch dessen aufeinanderfolgendes Passieren dieser Zonen, was hinsichtlich des Energieaufwandes ungerechtfertigt ist, da mehr als eine Hälfte des Materials einer Erwärmung und Kühlung dreimal unterzogen wird, weil jede der drei Nockenzerkleinerungszonen nicht mehr als 25% Pulver mit einer erforderlichen Fraktionszusammensetzung abgibt (die Teilchengröße nicht mehr als 0,8 mm).

Gleichzeitig ist es unmöglich, in dieser Einrichtung optimale Parameter der Zerkleinerung (Temperatur, Druck, Zeit) zu erreichen, bei denen die spezifische geometrische Fläche des Pulvers den Wert von 0,4 m$^2$/g übersteigen würde, da die Zerkleinerung des Materials an den sich berührenden, keine Kühlung aufweisenden Oberflächen der Nocken erfolgt. Darüber hinaus sind die Nockenzonen für das Vorhandensein in Gummiabfällen von Fremdkörpern (Sand, Steine, Metallkord) äusserst empfindlich und Eindringen der letzteren in die Spalte zwischen den Nocken hat deren Bruch zur Folge.

Es ist eine Einrichtung bekannt (RU-PS 2 143 324, B 02 C 19/22, Priorität vom 05.02.1998, am 27.12.1999 veröff., Bull. Nr. 36), in der die Zerkleinerung von Polymermaterialien, einschließlich Elastomere, an zwei sich berührenden konischen Arbeitselementen in Form von mehreckigen Scheibennocken erfolgt.

Der Hauptnachteil dieser Einrichtung besteht darin, dass Kühlmittel vollständig fehlen, ohne die die Herstellung von Pulvern mit einer vergrösserten Oberfläche problematisch ist.

Es sind auch Einschnecken-Einrichtungen mit zylindrischen Gehäusen bekannt, innerhalb derer koaxial aufeinanderfolgend und fluchtend eine Verdichtungsschnecke und ein Arbeitsorgan drehbar gelagert sind (RU-PS 2 167 056, B 29 B 17/00, 13/10, B 02 C 18/44, 19/22//B 29 K 101:00, Priorität vom 23.02.2000, am 20.05.2001 veröff., Bull. Nr. 14 und RU-PS 2 167 057, B 29 B 17/00, 13/10, B 02 C 18/44, 19/22//B 29 K 101:00, Priorität vom 23.02.2000, am 20.05.2001 veröff., Bull. Nr. 14).

Die Verarbeitung des Materials in diesen Einrichtungen erfolgt nicht in einem langgestreckten Ringspalt zwischen dem Gehäuse und dem Arbeitsorgan, sondern in Ringkammern. In den Einrichtungen weisen die Elemente wie Gehäuse, Schnecke und Arbeitsorgan jeweils unabhängige Kühlmittel auf. Gleichzeitig erlaubt es die Verwendung des Arbeitsorgans in Form von aufeinanderfolgend angeordneten kleinen rinförmigen Kammern mit einer sich verringernden Tiefe oder die Ausbildung am Gehäuse oder am Arbeitsorgan nach der Schnecke einer Kammer nicht, im Ringspalt erforderliche Temperaturen und Drücke zu erreichen, bei denen die Herstellung von aktiven Gummipulvern möglich ist.

EP 1 362 681 B1

Dem technischen Wesen nach liegt dem vorzuschlagenden Verfahren ein Extrusionsverarbeitungsverfahren am nächsten, das durch Einwirkung von Schubverformungen durchgeführt wird, die ausreichen, eine große Anzahl von Gummistücken zu zerstören und Pulver mit einer Teilchengröße bis zu 0,1 mm zu erhalten (RU-PS 2 057 013, B 29 B 17/00, Priorität vom 07.02.1994, am 27.03.1996 veröff., RU-PS 2 173 634, B 29 B 13/10, 17/00, 7/42, B 02 C 19/20, 19/22//B 29 K 101:00, Priorität vom 23.08.2000, am 20.09.2001 veröff., Bull. Nr. 26).

Der Hauptnachteil dieser Verarbeitungsverfahren besteht in einer niedrigen Leistung der genannten Prozesse (bis zu 104 kg/h). Darüber hinaus ist es bei der Verarbeitung von vulkanisierten Gummis mittels der beschriebenen Verfahren schwierig, technologische und technische Charakteristika der Gummis auf der Basis verschiedener Kautschuke zu berücksichtigen, besonders für Gummis auf der Basis von Kautschuken mit einer hohen plastischen Komponente der Verformung. Für Gummis mit einer hohen elastischen Komponente der Verformung, die zur Verarbeitung wesentlich höhere Werte der Schiebespannung und des Druckes erfordern, ist es schwierig, den Druck und die Temperatur, welche die maximale Zerkleinerung des Produktes ermöglichen, einzustellen. Darüber hinaus zeichnen sich die mit diesen Verfahren hergestellten Gummipulver durch eine kurze Lagerungszeit von 7 bis 10 Tage aus, wonach deren Aktivität sinkt und die Zusammenbackenfähigkeit stark zunimmt. Daher ist es am zweckmäßigsten, in einer Einrichtung zur Gummiverarbeitung Zonen zu schaffen, die die Erzielung höherer Werte des Druckes und der Temperatur des zu verarbeitenden Materials und das Auffinden chemischer Modifikatoren zur Beibehaltung der Aktivität des Pulvers gewährleisten.

Dem technischen Wesen nach liegt der erfindungsgemässen Einrichtung eine Einrichtung zur Herstellung eines Pulvers aus Polymermaterial am nächsten (RU-PS 2 173 635, B 29 B 13/00, 17/00, B 02 C 18/44, 19/22//B 29 K 101:00, Priorität vom 23.08.2000, am 20.09.2001 veröff.), die ein mit einem Beladeund einem Entladestutzen versehenes zylindrisches Gehäuse aufweist, innerhalb dessen Verdichtungs- und Zerkleinerungszonen gebildet sind, die eine Verdichtungsschnecke mit einer in Richtung der Zerkleinerungszone abnehmenden Tiefe der Rillen zwischen den Kämmen und ein Arbeitsorgan in Form eines Rotationskörpers aufweisen, auf dessen Arbeitsaussenfläche Nuten ausgebildet sind. Die beiden Elemente sind relativ zur Innenfläche des Gehäuses unter Bildung mit dieser eines Ringspaltes koaxial drehbar gelagert; dabei sind das Gehäuse, die Verdichtungsschnecke und das Arbeitsorgan mit Kühlmitteln versehen. Obwohl es mit der beschriebenen Einrichtung gelingt, Pulver mit einer ausreichend großen spezifischen Fläche (bis zu 0,5 m$^2$/g) herzustellen, bleibt die Leistung der Einrichtung nicht besonders hoch (max. 104 kg/h). Noch mehr, gelingt es in dieser Einrichtung nicht alle Gummitypen zu zerkleinern, z.B. Gummis mit hohen Werten der plastischen Komponente der Verformung (auf der Basis von Polychloroprenen, Cis-Isoprenkautschuken mit einem hohem Gehalt an Plastifizierungsmitteln, Chlor- und Brombutylkautschuken, da in der Einrichtung ein Gassättigungsbereich und eine zweite Zerkleinerungszone fehlen.

Das technische Ergebnis der Erfindung ist es, ein universelles hochleistungsfähiges energiesparendes Verfahren, das es ermöglicht, hochaktive Gummipulver aus Altreifen und vulkanisierten Abfällen gummitechnischer Artikel mit einer spezifischen geometrischen Fläche bis zu 5 m$^2$/g herzustellen, sowie eine Einrichtung zur Durchführung dieses Verfahrens zu schaffen.

Das technische Ergebnis wird dadurch erzielt, dass beim Verfahren zur Herstellung eines hochaktiven Gummipulvers mit einer spezifischen geometrischen Fläche von 0,4 bis 5,0 m$^2$/g aus Altreifen und vulkanisierte Abfälle gummitechnischer Artikel auf der Basis von verschiedenen Kautschuktypen, bevorzugt Isopren-, Butadien-, Butadienstyrol-, Butadiennitrilkautschuken, darunter hydrierten, Karboxylat-, Ethylen-Propylen-, Fluor-, Fluorsilikon-, Butadienvinylpyridin-, Silikon-, Epichlorhydrin-, Polychloropren-, chlorsulfonierten, Polyisobutylen-, Akrylatkautschuken sowie deren Mischungen in einem Apparat vom Extrusionstyp bei thermomechanischer Einwirkung zerkleinert werden. Erfindungsgemäß erfolgt die Zerkleinerung von vulkanisierten Gummis in zwei Stufen:

- unter den Bedingungen einer mit einer Geschwindigkeit von 5 bis 90 MPa/s zunehmenden mit einer Amplitude ± 5 bis 20 MPa und einer Frequenz von 5 bis 500 Hz pulsierenden Volumenspannung von 15 bis 150 MPa sowie einer mit einer Geschwindigkeit von 50 bis 150°C/s zunehmenden Temperatur in einem Bereich von 90 bis 380°C bei gleichzeitiger Gassättigung von Gummi mit Abbauprodukten von Plastifizierungsmitteln und anderen zur Gummizusammensetzung gehörenden Bestandteilen erfolgt zunächst deren Feinzerkleinerung unter Bildung einer porigen Struktur im Volumen der Gummiteilchen,

- bei einer starken Herabsetzung der Volumenspannung mit einer Geschwindigkeit von 50 bis 150 MPa/s zerstört sich dann die porige Struktur, vergrößert sich die spezifische geometrische Fläche der Gummiteilchen und die Gummi teilchen gekühlt werden.

Bei der Durchführung des Verfahrens zur Herstellung eines Gummipulvers mit einer spezifischen geometrischen Fläche nicht minder als 0,4 m$^2$/g aus Altreifen und vulkanisierten Abfällen gummitechnischer Artikel wird zu deren Zerstörung eine Verformung in einem Bereich von 105 bis 250% der Begrenzung der elastischen Komponente der Gummiverformung ermöglicht.

Die Effektivität dieses Verfahrens wird in Anwesenheit von Modifikatoren der Heterogenität erhöht, nämlich

3

Alkoholtelomeren der allgemeinen Formel H(CF$_2$-CF$_2$)$_n$-CH$_2$OH, N-Nitrosodiphenylamin, N-Zyklohexylthiophthalimid und chlorierten Paraffinen in einer Menge von 0,1 bis 1,9%, was es ermöglicht, die spezifische geometrische Fläche um 15 bis 40%, die Leistung des Prozesses um 10 bis 55% und die Lagerungszeit des Pulvers von 1 bis 6-9 Monaten zu vergrößern sowie die Zusammenbacken beim Transport zu vermeiden.

Darüber hinaus trägt zu einer erheblichen Erhöhung der Leistung der Ausrüstung eine physisch-chemische Behandlung der Arbeitsflächen der Hülsen mit fluorenthaltenden organischen Stoffen bei, z.B. mit Alkohol-Telomeren, und/oder mit Materialien, die Wolfram, Nickel, Chrom, Bor, Molybdän, sowie Karbide und Nitride von höchstschmelzenden Metallen enthalen, was zur Verringerung des Reibbeiwertes des Gummis am Metall von 0,82-0,87 bis 0,36-0,42 führt.

Bei der Durchführung des Verfahrens zur Herstellung eines hochaktiven Pulvers aus Abfällen von Gummis, in deren Rezeptur bei hohen Temperaturen abbaubare Bestandteile fehlen, erfolgt die Gummizerkleinerung in Anwesenheit von Modifikatoren in einer Menge von 0,7 bis 5,0%, die mit Gummi zusammengefügt bei einer Temperatur von 70 bis 120°C flüchtige Stoffe bilden. Als Modifikatoren werden dabei Sulfenamid M, Sulfenamid Z, Alkoholtelomere, Stearin-, Olein-, Zitronen- und Oxalsäure eingesetzt.

Das erfindungsgemässe Verfahren kann auch zur Herstellung von Mischthermoelastoplasten verwendet werden, wo eine gemeinsame Zerkleinerung der Abfälle von Gummiartikeln und Thermoplasten und/oder Thermoelastoplasten, wie Polyethylene, Polypropylene, Polyvinylchloride, Polyethylenterephthalate, Butadien-Styrol-Blockcopolymere usw. erfolgt.

Das technische Ergebnis wird auch dadurch erzielt, dass in einer Einrichtung zur Herstellung aktiver Gummipulver aus Altreifen und Abfällen gummitechnischer Artikel, die ein Gehäuse mit einem Belade- und einem Entladestutzen sowie Kühlmitteln aufweist, innerhalb dessen koaxial unter Bildung eines Ringspaltes, von einem Antrieb drehbar montiert und mit Kühlelement versehen eine Verdichtungsschnecke mit einer variablen Tiefe, die in Richtung des Entladestutzens abnimmt, und ein Aktivator gelagert sind, auf dessen Aussenfläche und an der dem Aktivator zugewandten Gehäuseinnenfläche sich schneidende Rillen ausgebildet sind, auf der der Verdichtungsschnecke zugewandten Gehäuseinnenfläche Längsrippen angeordnet sind, erfindungsgemäß auf einer Welle eine mehrgängige Verdichtungsschnecke und ein starr daran angeschlossener Aktivator, der als Rotationskörper ausgebildet ist, und eine Entladeschnecke gelagert sind, die als ein selbständiger Teil oder mit der Verdichtungsschnecke einstückig ausgebildet sein kann. Der Aktivator ist aussenseitig mit mehrgängigen schraubenförmigen Einschnitten mit einer konstanten Tiefe in der Richtung der Bewegung des Materials zum Entladestutzen und in der umgekehrten Richtung, mit einer gleichen Anzahl der Gänge und mit einer Steigung, die 1,1 bis 2,5 mal größer ist als die Steigung der Verdichtungsschnecke, und die Entladeschnecke ist mit mehrgängigen schraubenförmigen Kämmen in der geraden Richtung mit einer Steigung versehen, die 1,15 bis 3,0 mal größer ist als die Steigung der Verdichtungsschnecke, mit einem Zwischenwindungsraum zwischen den Kämmen, der in der. geraden Richtung durch die Verringerung der Anzahl der Kämme zunimmt, wobei die Kämme durchgehend oder durch mehrgängige schraubenförmige Einschnitte in der umgekehrten Richtung mit einer Steigung unterbrochen ausgebildet sind, die der Steigung der Kämme gleich ist, und das Verhältnis der Länge des Aktivators längs der Achse zur Länge der Entladeschnecke in einem Bereich von 0,2:1 bis 1: 0, 3 liegt, wobei in die Gehäuseinnenfläche, welche sich an die Schnecken mit einer Steigung von 0,5 bis 1,5 der Anschnittssteigung der jeweiligen Schnecke anschließt, mehrgängige Einschnitte in der geraden Richtung und/oder sich kreuzende Einschnitte in der geraden und umgekehrten Richtung mit einem halbkreisförmigen Profil mit einem Radius eingearbeitet sind, der dem 0,01 bis 0,03 Durchmesser der Schnecke entspricht und eine Tiefe um 5 bis 15% kleiner als der Radius aufweist, wobei die Anzahl der Einschnitte in einer Richtung im Bereich von 3 bis 50 liegt und das Verhältnis der Anzahl der Einschnitte in der geraden und umgekehrten Richtung 0,3:1,0 bis 1,0:0,3 beträgt.

In der Einrichtung werden die Einschnitte in der geraden und umgekehrten Richtung innerhalb des Gehäuses in die Innenfläche einer lösbaren aus einem oder zwei Teilen bestehenden Hülse eingearbeitet.

Die Schnecken können auf der Aussenfläche der einen lösbaren Hülse oder der zwei Hülsen ausgebildet sein.

Die Kühlelemente in der Einrichtung werden als eingängige schraubenförmige Rillen mit einer vergrösserten Oberfläche der Wandungen an den lösbaren Hülsen des Gehäuses und der Schnecken auf der von Arbeitsanschnitten freien Seite zum Durchfluss des Kühlmediums ausgebildet.

Bei der Ausbildung der Einrichtung wird der Antrieb auf der Basis eines Elektromotors mit einer konstanten oder variablen Drehzahl und einem Regelbereich von 1:15 gefertigt.

Gerade so eine Ausbildung der Einrichtung schafft Bedingungen für die zweistufige Zerkleinerung von Gummi zunächst bei der Zunahme der Volumenspannung und der Temperatur mit der notwendigen Geschwindigkeit und der gleichzeitigen Gassättigung von Gummi unter Bildung einer porigen Struktur im Teilchenvolumen und dann bei der starken Abnahme der Volumenspannung mit der vorgegebenen Geschwindigkeit, bei der die porige Struktur zerstört, die spezifische geometrische Fläche der Gummiteilchen vergrößert wird und die Teilchen gekühlt werden.

Somit erfolgt erfindungsgemäß die Zerkleinerung von Altreifenstücken und Abfällen gummitechnischer Artikel mit einer Größe von 10 bis 15 mm in dem vorstehend beschriebenen Apparat in zwei Stufen, die eine Feinzerkleinerung von Gummis nach folgendem Schema gewährleisten. Auf die Gummistücke wirkt eine zunehmende pulsierende Volumenspannung mit einer Amplitude von 5 bis 20 MPa und einer Frequenz von 5 bis 500 Hz in einem Bereich von 15 bis 150 MPa ein. Die Geschwindigkeit der Zunahme beträgt 5 bis 90 MPa/s, was zu einer schnellen Erwärmung und Zerkleinerung der zu verarbeitenden Gummis führt. Die Erwärmung erfolgt mit einer Geschwindigkeit von 50-150°C/s bis 90-380°C/s je nach dem Typ der zu verarbeitenden Gummis.

Die Genauigkeit der Aufrechterhaltung der Temperatur des zu zerkleinernden Objektes wird durch eine regelbare Flüssigkeitskühlung des Apparates durchgeführt.

Ein derartiges Schema der Erzeugung im Apparat des pulsierenden Druckes und der Erwärmung trägt nicht nur zur Zerkleinerung der Gummis sondern auch zu deren Gassättigung mit fluchtigen Stoffen bei, die beim Erwärmen und Abbau der Plastifizierungsmittel und anderer Bestandteile gebildet werden, die flüchtige Stoffe enthalten oder beim Abbau ausscheiden.

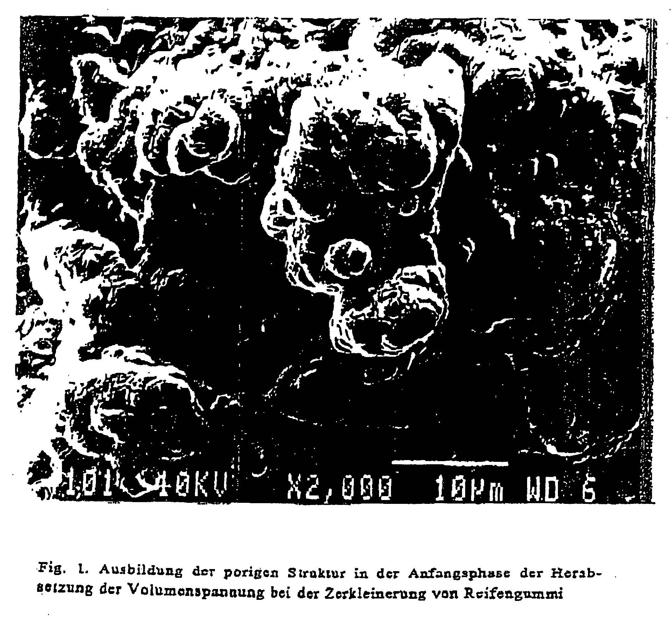

Die Ausbildung der porigen Struktur in den Teilchen der zerkleinerten Gummis ist in Fig. 1 deutlich gezeigt.

Es sei auch bemerkt, dass die erforderlichen Werte der Volumenspannung ebenfalls durch den Gummityp bestimmt werden und von der elastischen Komponente der Gummiverformung abhängig sind. Die Grenze der elastischen Komponente bei der Verformung mit der einachsigen Ausdehnung kann man rechnerisch nach der Formel:

$$\gamma = \delta/2\ \delta T$$

erhalten, wo $\delta$ die Differenz der normalen Spannungen und $\delta T$ die tangentiale Spannung bedeuten.

Tager A.A., Physische Chemie von Polymeren, 1968, Verlag "Chimia", (Таҕер A.A. физическая Химия полимеров, 1968, изд. «ХиМия», MOCкBa, S. 261). Moskau, S.261).

Es ist festgestellt worden, dass es in dieser Stufe der Zerkleinerung notwendig ist, die Verformung des vulkanisierten Gummis in einem Bereich von 105 bis 250% der Grenze der elastischen Komponente der Gummiverformung zu erzeugen. Dabei ermöglicht die Verformungsgröße der Gummis von 105 bis 145% die Zerstörung der Teilchen der Vulkanisate mit einer hohen plastischen Komponente der Verformung und von 150 bis 250% mit einer hohen elastischen Komponente der Verformung.

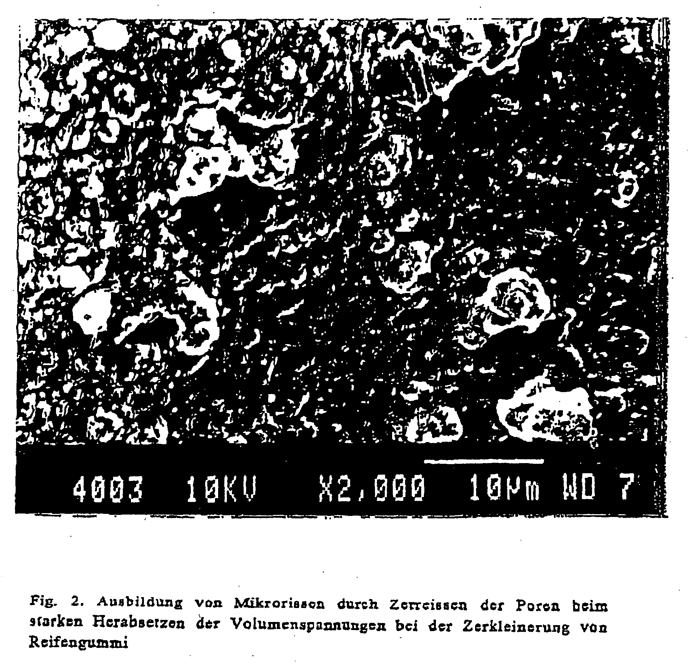

Die nächste Stufe der Zerkleinerung der Gummis im Apparat bestehe in einer starken Abnahme der Volumenspannungen mit einer Geschwindigkeit von 15 bis 150 MPa/s, was zum Reissen der Poren und zur Bildung einer großen Anzahl von Mikrorissen auf der Oberfläche der Gummiteilchen führt, die eine starke Vergrößerung deren spezifischen geometrischen Fläche und entsprechend die Erhöhung der physischen und chemischen Aktivität (Fig. 2) sowie die Kühlung des zu entladenden Pulvers bis auf eine Temperatur von 40 bis 60°C hervorruft.

Wie die Experimente gezeigt haben, führt der Einsatz der Modifikatoren der Heterogenität zu einer starken Vergrößerung der Anzahl der Mikrorisse in den Teilchen von Gummipulvern. Dazu gehören Alkoholtelomere der Formel $H(CF_2\text{-}CF_2)_n\text{-}CH_2OH$, wo n > 4, N-Nitrosodiphenylamin, N-Zyklohexylthiophthalimid und chloriertes Paraffin.

Der Einsatz der genannten Modifikatoren in einer Menge von 0,1 bis 1,9% ermöglicht es:

- die Zeit der Erreichung der optimalen Spannungswerte in der ersten Stufe der Verarbeitung durch Vergrößerung des Volumens der zu transportierenden Gummistücke zu verkürzen (die Verringerung des Reibwertes Gummi/Metall), was es erlaubt, die Leistung des Apparates um 10 bis 55% zu erhöhen,
- die spezifische geometrische Fläche des Pulvers um 15 bis 40% zu vergrößern,
- die Beibehaltung der hohen physischen und chemischen Aktivität der Gummipulver von 7-30 Tagen bis 6-9 Monaten zu erhöhen,
- die Zusammebackenfähigkeit des aktiven Gummipulvers bei Lagerung und Transport zu vermeiden.

Die Gesamtheit der Elemente der beweglichen und unbeweglichen Teile der Einrichtung gewährleistet die Durchführung des erfindungsmässigen Verfahrens.

Die erste für die Schiebezerkleinerung charakteristische Stufe der Zerkleinerung erfolgt zwischen den Kämmen der Verdichtungsschnecke an ihrem Ende.

Die notwendige Geschwindigkeit des Anstieges der Volumenspannungen und der Temperatur sowie die Leistung der Gummizerkleinerung in dieser Stufe werden durch die Drehzahl der Schnecke, das Verhältnis der Gewindesteigung der Kämme der Verdichtungsschnecke und der Einschnitte auf der der Schnecke zugewandten Gehäuseoberfläche sowie die Erstreckung der Schnecke längs der Drehachse bestimmt.

Die Pulsation der Volumenspannung intensifiziert die Verdichtungs-, Erwärmungs- und Zerkleinerungsprozesse. Die Frequenz und die Amplitude der Pulsation der Volumenspannung werden durch die Anzahl der schraubenförmigen Einschnitte in der umgekehrten Richtung auf der den Schnecken zugewandten Gehäuseoberfläche, die Anzahl der Gänge an der Verdichtungsschnecke und die Anzahl der schraubenförmigen Einschnitte auf der Oberfläche des Aktivators vorgegeben.

Die Gassättigung der Gummiteilchen und die Ausbildung von gasgefüllten Mirkoporen in diesen beginnt am Ende der sich an den Aktivator anschließenden Verdichtungsschnecke und endet am Anfang der Entladeschnecke, wenn der Druck auf das Material beginnt, sich stark zu verringern. Durch die Anschnittssteigung der Einschnitte und deren Anzahl auf der Oberfläche des Aktivators, sowie durch dessen Länge ist der Gassättigungsprozess über eine gleichmäßigere Durchwärmung des Materials und eine vollständigere Verdampfung der Gummibestandteile regelbar.

Somit regelt der Aktivator den Zerkleinerungsprozess, indem er die Bedingungen der gleichmäßigeren Durchwärmung des Materials bis zu höheren Temperaturen schafft.

Die zweite Stufe der Zerkleinerung beginnt am Anfang der sich an den Aktivator anschließenden Entladeschnecke und endet im Bereich des Entladestutzens. Bei deren Durchführung ist es wichtig, die Geschwindigkeit des Abwurfes der Volumenspannung des Materials einzuhalten und eine vorzeitige Verringerung des Druckes in den Mikroporen zu vermeiden, welcher die Wandungen der Mikroporen zerstören und damit die spezifische geometrische Fläche der Teilchen stark vergrößern sowie deren Temperatur herabsetzen soll. Die Geschwindigkeit des Abwurfes des Volumendruckes wird durch das Volumen des Zwischenwindungsraumes zwischen den Kämmen in der geraden Richtung dieses Schneckenteiles, deren Anschnittssteigung und die Tiefe der Windungen sowie die Anschnittssteigung und die Anzahl der Gänge der schraubenförmigen Einschnitte in der geraden Richtung auf der der Schnecke zugewandten Gehäuseoberfläche bestimmt.

Das Vorhandensein der mehrgängigen schraubenförmigen Einschnitte in der umgekehrten Richtung mit derselben Steigung wie die Kämme in der geraden Richtung, aber mit einer geringeren Anzahl der Einschnitte (oder Gänge) an der Entladeschnecke beeinflusst die Temperatur des aus dem Entladeöffnung der Einrichtung austretenden Pulvers.

Der Vergleich der erfindungsgemäßen technischen Lösung mit den nächstliegenden Stand der Technik erlaubt es zu behaupten, dass sie das Kriterium "Neuheit" erfüllt, und das Fehlen in den bekannten technischen Lösungen der kennzeichnenden Merkmale des erfindungsgemäßen Verfahrens und der erfindungsgemäßen Einrichtung zur Herstellung eines hochaktiven Gummipulvers zeugt davon, dass die erfindungsgemäße Lösung das Kriterium "Erfindungshöhe" erfüllt.

In Fig. 1 ist eine mittels des Scanningelektronenmikroskopen JSV-840 (JOEL) erhaltene Aufnahme der Gummiteilchen im Augenblick der Bildung der porigen Struktur in der anfänglichen (ersten) Stufe der Zerkleinerung von Reifengummi gezeigt.

In Fig. 2 ist eine mittels desselben Scanningelektronenmikroskopen erhaltene Aufnahme der Gummiteilchen nach der Bildung der Mikrorissen durch Reissen der Poren bei einer starken Abwurf der Volumenspannungen während der Zerkleinerung von Reifengummi gezeigt.

In Fig. 3 ist ein Längsschnitt der erfindungsgemäßen Einrichtung gezeigt.

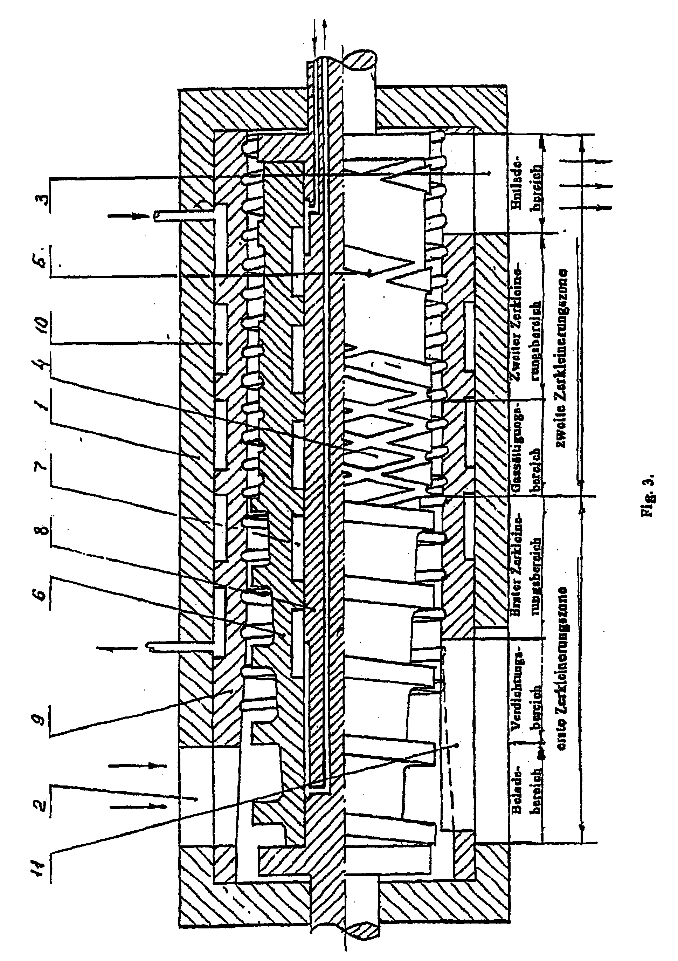

Die Einrichtung zur Herstellung eines hochaktiven Gummipulvers aus Altreifen und Abfällen gummitechnischer Artikel (Fig.3) weist ein Gehäuse 1 mit einem Beladestutzen 2 und einem Entladestutzen 3, innerhalb dessen ein Aktivator 4 angeordnet ist, in dessen Seitenfläche mehrgängige schraubenförmige Einschnitte in der geraden und umgekehrten Richtung eingearbeitet sind, und einen Entladestutzen 5 mit mehrgängigen schraubenförmigen Kämmen in der geraden Richtung auf, die durch schraubenförmige Einschnitte in der umgekehrten Richtung durchschnitten sind.

An den Aktivator ist beladestutzenseitig eine mehrgängige Verdichtungsschnecke 6 angekoppelt und/oder mit diesem einstückig ausgebildet.

Die Verdichtungsschnecke und der Aktivator sind auf einer Welle 8 angebracht und auf der Aussenfläche eines lösbaren Hülse ausgebildet und an deren Innenseite ist ein Kühlelement in Form eines eingängigen schraubenförmigen Kanals ausgebildet.

An der Innenfläche des Gehäuses 1 ist eine lösbare Hülse 9 gelagert, an deren der Verdichtungsschnecke 6 zugewandten Innenfläche mehrgängige schraubenförmige Einschnitte mit einem Halbrundprofil in der geraden und der umgekehrten Richtung wie an der dem Aktivator zugewandten Oberfläche ausgebildet sind. An der Aussenseite der Hülse 9 ist ein Kühlelement 10 in Form eines eingängigen schraubenförmigen Kanals ausgebildet.

Unterhalb des Beladestutzens sind rechteckige Rippen 11 in einer Anzahl von 3 bis 6 Stück 'am Umfang des Gehäuses 1 gleichmäßig verteilt angeordnet.

Somit sind innerhalb des Gehäuses 1 zwei Zerkleinerungszonen gebildet.

Die erste Zone weist einen Beladebereich, einen Verdichtungsbereich und einen ersten Zerkleinerungsbereich auf und ist von der mehrgängigen Verdichtungsschnecke 6 und von einem diese umgebenden Teil der Hülse 9 gebildet, an deren Innenfläche eine konische Öffnung bis zum ersten Zerkleinerungsbereich mit den 3 bis 6 Rippen 11 sowie eine zylindrische Öffnung mit einem Durchmesser ausgebildet sind, der 1,003 bis 1,02 mal größer ist, als der Durchmesser der Verdichtungsschnecke 6, und in die Innenfläche der letzteren sind mit einer Steigung, die 0,5 bis 1,5 mal größer ist als die Anschnittssteigung der Verdichtungsschnecke, mehrgängige 3 bis 50 schraubenförmige Einschnitte mit einer konstanten Tiefe in der geraden und/oder der umgekehrten Richtung eingearbeitet. Dabei liegt das Verhältnis der Längen längs der Drehache des Verdichtungsbereiches und des ersten Zerkleinerungsbereiches in einem Bereich von 1:0,5 bis 0,5:1. Die mehrgängigen schraubenförmigen Einschnitte sind mit einem Profil halbkreisförmigen Querschnitts mit einem Radius, der 0, 005 bis 0,03 des Durchmessers der Verdichtungsschnecke beträgt, und mit einer Tiefe, die um 5 bis 15% kleiner ist, als der Radius, ausgebildet, wobei das Verhältnis zwischen der Anzahl der Einschnitte in der geraden und umgekehrten Richtung sich in einem Bereich von 0,3:1,0 bis 1,0:0,3 befindet.

Die zweite Zerkleinerungszone weist einen Gassättigungsbereich, einen zweiten Zerkleinerungsbereich und einen Entladebereich auf. Sie sind von einem Aktivator in Form eines Rotationskörpers und einer starr daran angekoppelten Entladeschnecke und von einem die beiden Bauteile umgebenen Gehäuse gebildet. Dabei ist der Aktivator mit der Entladeschnecke fluchtend mit der Verdichtungsschnecke und koaxial zur Gehäuseinnenfläche angeordnet. In der Aussenfläche des Aktivators sind mit einer Steigung, die 1,1 bis 2,5 mal größer ist als die Anschnittssteigung der Verdichtungsschnecke, mehrgängige schraubenförmige Einschnitte mit einer konstanten Tiefe in der geraden und umgekehrten Richtung mit der gleichen Steigung und der gleichen Anzahl der Gänge und auf der Aussenfläche der Entladeschnecke sind mehrgängige schraubenförmige Kämme in der geraden Richtung mit einer Steigung, die 1,15 bis 3,0 mal größer ist als die Anschnittssteigung der Verdichtungsschnecke, mit einem Volumen des Zwischenwindungsraumes, das sich in Richtung des Entladestutzens vergrößert, ausgebildet. Die Kämme der Schnecke sind dabei entweder durchgehend oder durch die schraubenförmigen Einschnitte in der umgekehrten Richtung mit einer Steigung, die der Anschnittssteigung der Kämme gleich ist, unterbrochen ausgebildet.

Die zylindrische den Aktivator und die Entladeschnecke umgebende Gehäuseinnenfläche ist mit mehrgängigen schraubenförmigen Einschnitten versehen, die mit einer Steigung, die um 0, 5 bis 1, 5 kleiner ist als die Anschnittssteigung der Einschnitte am Aktivator und der Kämme an der Entladeschnecke in der geraden und der umgekehrten Richtung, ausgebildet sind. Dabei liegt das Verhältnis der Längen längs der Drehache des Aktivators und der Entladeschnecke in einem Bereich von 0,2:1 bis 1:0,3 und die mehrgängigen schraubenförmigen Einschnitte am Gehäuse, am Aktivator und an der Entladeschnecke sind mit einem Profil halbkreisförmigen Querschnitts mit einem Radius, der 0,005 bis 0,03 des Durchmessers der Verdichtungsschnecke beträgt, und mit einer Tiefe, die um 5 bis 15% kleiner ist als der Radius, ausgebildet, wobei das Verhältnis zwischen der Anzahl der Einschnitte in der geraden und der umgekehrten Richtung sich in einem Bereich von 0,3:1,0 bis 1,0:0,3 befindet.

Der Hauptprinzip des Verfahrens ist bei der Arbeit der in Fig. 3 dargestellten Einrichtung realisiert.

Die vorher bis zu 15 mm zerkleinerten Gummischnitzel werden mittels einer in Fig. 3 nicht gezeigten Dosiervorrichtung dem Beladestutzen 2 gleichmäßig zugeführt. In der Einrichtung werden die Gummischnitzel von den Kämmen der Verdichtungsschnecke 6 mitgenommen und über deren Windungen mit der sich verringernden Tiefe geführt fangen an, sich zu verdichten. Dabei erhöhen sich die Volumenspannungen und die Temperatur des Materials. Beim Herantreten des Materials an den ersten Zerkleinerungsbereich erreicht die Geschwindigkeit der Erhöhung der Volumenspannung ein Maximum, die Amplitude der Pulsationen steigt an, wodurch der Gummi sich schnell durchwärmt. Beim Erreichen des ersten Zerkleinerungsbereiches zerstört sich der Gummi unter Einwirkung der pulsierenden Volumenspannung bei einer bestimmten Temperatur (für den jeweiligen Gummi charakteristisch). Gleichzeitig beginnt die Gassättigung der Teilchen mit den Abbauprodukten des Gummis und die Ausbildung der porigen Struktur in diesen.

Beim Übergang auf den Aktivator 4 des Gassättigungsbereiches durchwärmt sich der Gummi unter Einwirkung der Pulsation der Volumenspannung bis zur maximalen Temperatur. Dabei verdampfen die Abbauprodukte des Gummis extrem und die Gassättigung der Gummiteilchen erreicht ein Maximum. An der Entladeschnecke des zweiten Zerkleinerungsbereiches verringern sich die auf den Gummi einwirkenden Volumenspannungen stark und der Gasdruck zerreisst die Poren der feinen Gummiteilchen, wobei die spezifische geometrische Fläche der Teilchen sich um das Mehrfache vergrößert. Gleichzeitig beginnt auch die Temperatur der Gummiteilchen, sich zu senken und setzt fort, beim Kontakt mit den Wandungen der Hülsen 6 und 9 sich zu senken.

Die Temperaturführung der Zerkleinerung wird über ständiges Pumpen des Kältemediums durch die Kühlmittel der Verdichtungsschnecke, des Arbeitsorgans und des Gehäuses optimal aufrechterhalten. Das Vorhandensein dieser Zonen in der erfindungsmässigen Einrichtung trägt zur starken Erhöhung deren Leistung bei (1,5 bis 2,7 fach).

In Fig. 3 ist der Antrieb der Einrichtung nicht gezeigt. Die Betriebsparameter der Verarbeitung von Reifengummi mit Textilkord sind in der Tabelle 1 angeführt.

In einem Beispiel der Verwirklichung des Verfahrens in der Einrichtung werden die Betriebsparameter der Einrichtung mit dem Durchmesser der Verdichtungsschnecke von 230 mm angeführt. Das Verhältnis der Länge der Verdichtungsschnecke längs der Drehachse zur Länge des Aktivators und der Entladeschnecke beträgt 0,91 und das Verhältnis der Länge des Aktivators zur Länge der Entladeschnecke beträgt 0,33.

Die Verdichtungsschnecke ist 2-gängig und der sich an die Verdichtungsschnecke anschließende Anschnitt der Gehäuseinnenfläche ist durch mehrgängige schraubenförmige Einschnitte ausgebildet, wobei das Verhältnis der Anzahl der Einschnitte in der geraden und der umgekehrten Richtung 0,5 beträgt.

Der Aktivator ist durch Anschnitt auf der Aussenfläche von mehrgängigen schraubenförmigen Einschnitten in der geraden und umgekehrten Richtung mit gleicher Anzahl mit einer Steigung, die 1,2 mal größer ist als die Anschnittssteigung der Kämme der Verdichtungsschnecke ausgebildet.

Die Entladeschnecke ist durch Anschnitt auf der Aussenfläche von mehrgängigen schraubenförmigen Kämmen in der geraden Richtung mit einer Steigung, die 1,2 mal größer ist als die Anschnittssteigung der Kämme der Verdichtungsschnecke mit einer Anzahl der Kämme, die 0,5 der Anzahl der Einschnitte des Aktivators in der geraden Richtung gleich ist, ausgebildet.

Die schraubenförmigen Kämme sind durch die gleiche Anzahl der Einschnitte mit derselben Steigung, aber in der umgekehrten Richtung durchschnitten.

An der den Aktivator und die Entladeschnecke umgebenden Gehäuseinnenfläche sind mehrgängige schraubenförmige Einschnitte in der geraden und der umgekehrten Richtung mit dem Verhältnis von 0,5 und der Steigung um 1,2 mal kleiner als die Anschnittssteigung der Aktivatorteinschnitte ausgebildet.

Tabelle 1

Betriebsparameter der Verarbeitung von Reifengummi mit

Textilkord

| Versuchs-Nr. | Drehzahl der Welle, min⁻¹ | Leis-tung, kg/h | Durchlauf-zeit durch die Einrich-tung, s | Vol.Span-nung in der ersten Zone der Zerkleine-rung, MPa | Temperatur in der ersten Zone der Zerkleine-rung, °C | Tempera-tur des Gummipul-vers am Ausgang, °C |
|---|---|---|---|---|---|---|
| 1 | 32 | 80 | 6,0 + 0,8 | 42 | 155 | 35 |
| 2 | 47 | 145 | 3,4 + 1,0 | 68 | 167 | 40 |
| 3 | 56 | 166 | 2,1 + 1,3 | 90 | 170 | 42 |
| 4 | 67 | 130 | 1,3 + 0,9 | 70 | 176 | 48 |
| 5 | 76 | 105 | 1,7 + 0,4 | 60 | 153 | 57 |
| 6 | 96 | 91 | 1,5 + 0,3 | 30 | 150 | 34 |
| 7 | 60 | 154 | 3,3 + 2,7 | 150 | 185 | 71 |
| 8* | 56 | 192 | 2,2 + 1,3 | 92 | 171 | 44 |

Tabelle 1 (Fortsetzung)

| Versuchs-Nr. | Amplitu-de der Pulsati-on der Volumen-spannung, ± MPa | Frequenz der Pulsation der Volumen-spannung, Hz | Geschwin-digkeit der Zunahme der Volumen-spannung, MPa/s | Geschwin-digkeit der Abnahme der Volumen-spannung, MPa/s | Spez. Energie-aufwand für die Pulverher-stellung, kWh/t | Spez. geometri-sche Fläche, m²/g |
|---|---|---|---|---|---|---|
| 1 | 3-7 | 16-305 | 5-7 | 50-55 | 800 | 0,51 |
| 2 | 5-9 | 23-450 | 20-25 | 60-70 | 540 | 0,78 |
| 3 | 8-14 | 28-535 | 42-46 | 70-75 | 430 | 0,82 |
| 4 | 12-16 | 34-645 | 52-55 | 80-95 | 515 | 0,68 |
| 5 | 15-18 | 38-731 | 85-90 | 140-150 | 760 | 0,59 |
| 6 | 15-20 | 48-922 | 60-70 | 120-130 | 800 | 0,56 |
| 7 | 8-14 | 30-576 | 45-50 | 56-61 | 486 | 0,9 |
| 8* | 8-14 | 28-535 | 42-46 | 70-75 | 415 | 1,05 |

*Anmerkung. Bei der Herstellung von Gummipulvern erfolgte die Zerkleinerung in Anwesenheit des Modifikators der Heterogenität.

Wie den in der Tabelle 1 angeführten Kennwerten entnehmbar ist, ermöglicht die vorzuschlagende Einrichtung die Verwirklichung des Verfahrens zur Herstellung eines hochaktiven Pulvers über den gesamten Bereich der erfindungsgemässen Betriebsparameter mit den technischen Kennwerten, welche erheblich höher sind als die im Prototyp (nächstliegenden Stand der Technik) beschriebenen.

Wie aus der Tabelle 1 ersichtlich ist, ermöglicht es die Einrichtung bei der Zerkleinerung von Reifengummi mit Textilkord, das Pulver bei den optimalen Betriebsparametern durch Änderung der Drehzahl der Welle und der Geschwindigkeit der Materialzuführung (der Leistung) herzustellen.

So weist das herzustellende Pulver bei der Drehzahl der Welle von 56 min$^{-1}$ (Versuch Nr. 3) und Leistung 166 kg/h die spezifische geometrische Fläche von 0,82 m$^2$/g auf und der spezifische Energieaufwand betrug 430 kWh/t.

Darüber hinaus betrug die Leistung 192 kg/h bei der Verarbeitung von Reifengummi mit Textilkord in Anwesenheit des Modifikators der Heterogenität in einer Menge von 0,2% (Versuch Nr. 8) bei derselben Drehzahl der Welle von 56 min$^{-1}$, während die spezifische geometrische Fläche sich bis zu 1,05 m$^2$/g vergrößerte und der Energieverbrauch sich bis auf 415 kWh/t verringerte.

Die durchgeführten Versuche haben deren weitestgehende industrielle Verwendbarkeit bestätigt.

Die Verwirklichung der vorzuschlagenden komplexen technischen Lösung zur Herstellung von aktiven Gummipulvern aus Altreifen und Abfällen gummitechnischer Artikel auf der Basis von verschiedenen Kautschuken kann mit folgenden Beispielen veranschaulicht werden.

Beispiel 1

Die Stücke von Busaltreifen mit Textilkord mit der Größe bis zu 15 mm werden einer Zerkleinerung in der beschriebenen Einrichtung mit und ohne Modifikator der Heterogenität mit folgenden Betriebsparametern unterzogen:

- Anstieg der Volumenspannung: 10 bis 90 MPa, Amplitude: 8 bis 14 MPa, Anstiegsgeschwindigkeit: 42 bis 46 MPa/s,
- Verformung der Gummiteilchen: 150 bis 180% der Grenze der elastischen Komponente,
- Temperatur der Zerkleinerung: 170°C, Geschwindigkeit der Temperaturerhöhung: 80 bis 95°C/s,
- Abnahme der Volumenspannung mit der Geschwindigkeit von 70 bis 75 MPa/s.

Im Ergebnis der Zerkleinerung wurden Gummipulver mit folgender Fraktionszusammensetzung erhalten (ohne Modifikator):

- 69% der Teilchen mit der Größe von 0,1 bis 0, 8 mm und 24% der Teilchen mit der Größe von 0,81 bis 1,6 mm,
- 7% synthetische Kordfaser, und (mit Modifikator)
- 78% der Teilchen mit der Größe von 0,1 bis 0,8 mm und 15% der Teilchen mit der Größe von 0,81 bis 1,3 mm,
- 7% synthetische Kordfaser.

Das Gummipulver wird weiter einer Vibrations-Luft-Separierung von synthetischen Kordfragmenten unterzogen und gleichzeitig nach der gewünschten Korngröße fraktioniert.

Die Fraktion des aktiven Gummipulvers mit der Teilchengröße bis zu 0,8 mm wurde zur Herstellung von Recycling-Gummis durch vorheriges Mischen des Pulvers mit der Rohgummimischung verwendet, welche für die Herstellung des Laufgummis von Busreifen bestimmt war.

In der Tabelle 1.1 sind technische Daten des Prozesses zur Herstellung des aktiven Gummipulvers und die Kennwerte dessen Aktivität (spezifische Fläche) angeführt. Das Ausgangsmaterial stellte Busreifen dar.

Tabelle 1.1

| Versuchsnummer | spezifischer Energieaufwand für die Pulverherstellung kWh/t | | spezifische geometrische Flache des Pulvers m$^2$/g | |
|---|---|---|---|---|
| | Ohne Modifikator | mit Modifikator | ohne Modifikator | mit Modifikator |
| 1 | 420 | 405 | 0,65 | 0,78 |
| 2 | 430 | 415 | 0,82 | 1,05 |

In der Tabelle 1.2 sind plastoelastische und physisch-mechanische Eigenschaften des Laufgummis von Busreifen angeführt, welches das aktive, mittels verschiedener Verfahren hergestellte Gummipulver aufweist.

Tabelle 1.2

Aufstellung der plastoelastischen und physisch-mechanischen Eigenschaften des Laufgummis von Busreifen, welches das bei der Entsorgung der Reifen (Größe bis zu 0,8 mm) hergestellte aktive Gummipulver (AGP) aufweist.

| Kennwerte | Anzahl der AGP-Masseteile je 100 Masseteile der Kautschukphase | | | | | | | | | | |
|---|---|---|---|---|---|---|---|---|---|---|---|
| | AGP-Typ | | | | | | | | | | |
| | AGP unmodifiziert | | | | | | AGP modifiziert | | | | |
| | 0 | 5 | 10 | 15 | 20 | 40 | 5 | 10 | 15 | 20 | 40 |
| Plastizität, vereinbarte Einheit | 0,40 | 0,41 | 0,42 | 0,40 | 0,46 | 0,40 | 0,43 | 0,45 | 0,41 | 0,49 | 0,44 |
| Mooney-Viskosität, 100°Cx 4 min, bed. Einh | 60 | 61 | 61 | 60 | 61 | 65 | 55 | 58 | 52 | 53 | 50 |
| Vulkanis.-Geschwind.*, 150°Cx 30 min, T = 90 min | 10 | 10 | 9,5 | 9,7 | 9,7 | 9,7 | 8,0 | 9,0 | 9,0 | 10,0 | 9,0 |
| Dehnungs-Modul 300%, MPa | 8,8 | 8,8 | 8,8 | 8,5 | 7,8 | 7,5 | 10,4 | 10,1 | 9,9 | 7,6 | 9,0 |
| Bed. Zug-festigkeit, MPa | 18,9 | 19,5 | 17,8 | 17,6 | 15,2 | 12,5 | 19,3 | 19,7 | 19,5 | 16,6 | 16,1 |
| Rel. Bruchdehnung, % | 510 | 526 | 510 | 510 | 510 | 504 | 482 | 517 | 470 | 517 | 470 |
| Rel. Rest-dehnung nach Bruch, % | 16 | 16 | 17 | 17 | 19 | 14 | 16 | 17 | 12 | 12 | 12 |
| Reiss-festigkeit, MPa | 8,6 | 11,3 | 9,1 | 8,9 | 8,7 | 8,2 | 9,6 | 9,1 | 9,1 | 9,0 | 8,4 |
| Shore-A-Härte, bed. Einh. | 61 | 64 | 67 | 65 | 63 | 65 | 66 | 66 | 65 | 60 | 64 |
| Volumen-Verluste beim Scheuern | 32 | 34 | 24 | 29 | 35 | 55 | 32 | 34 | 32 | 32 | 35 |

Tabelle 1.2 (Fortsetzung)

| Kennwerte | Anzahl der AGP-Masseteile je 100 Masseteile der Kautschukphase | | | | |
|---|---|---|---|---|---|
| | AGP-Typ | | | | |
| | AGP modifiziert +3% Kord | | | | |
| | 5 | 10 | 15 | 20 | 40 |
| Plastizität, bed. Einh. | 0,48 | 0,46 | 0,46 | 0,42 | 0,48 |
| Mooney-Viskosität, 100°Cx 4 min, bed. Einh. | 55 | 54 | 56 | 57 | 61 |
| Vulkanis.-Geschwind.*, 150°Cx 30 min, T = 90 min | 8,0 | 7,0 | 8,0 | 8,0 | 8,0 |
| Dehnungs-Modul 300%, MPa | 10,9 | 10,9 | 10,2 | 9,9 | 9,8 |
| Bed. Zug-festigkeit, MPa | 19,8 | 18,8 | 18,9 | 18,3 | 17,3 |
| Rel. Bruchdeh-nung, % | 500 | 492 | 495 | 510 | 492 |
| Rel. Rest-dehnung nach Bruch, % | 16 | 12 | 12 | 12 | 12 |
| Reiss-festigkeit, MPa | 9,0 | 9,0 | 8,4 | 8,1 | 9,7 |
| Shore-A-Härte, vereinbarte Einheit | 66 | 67 | 66 | 66 | 66 |
| Volumen-Verluste beim Scheuern | 32 | 34 | 34 | 32 | 34 |

*Monsanto-Rheometer

Anmerkungen.

1. Modifiziertes AGP ist bei der Herstellung von Gummimischungen ausgezeichnet homogenisierbar.
2. Vulkanisierte modifiziertes AGP enthaltende Gummimuster wiesen eine ebene glatte Oberfläche auf.

Wie aus den Tabellen ersichtlich ist, ermöglicht es das erfindungsgemässe Verfahren, ein hochwertiges aktives Gummipulver herzustellen, dessen Einführung ins Laufgummi bis zu 10 Masseteilen seine Eigenschaften nicht verschlechtert. Im Falle der Verwendung des Modifikators der Heterogenität bei der Zerkleinerung könnte die Menge am einzuführenden Pulver mindestens bis zu 15 Masseteilen vergrößert werden. Darüber hinaus ermöglicht es die Verwendung der Modifikatoren, den Energieaufwand bei der Zerkleinerung zu vermindern und die Leistung der Anlage zu erhöhen (um 15 bis 55%, wie der Versuch gezeigt hat).

Beispiel 2

Die Abfälle von gummitechnischen Artikeln aus Gummis auf der Basis von Ethylen-Propylenkautschuk mit der Teilchengröße bis zu 15 mm werden einer Zerkleinerung in der beschriebenen Einrichtung mit und ohne Modifikator der Heterogenität mit folgenden Betriebsparametern unterzogen:

- Anstieg der Volumenspannung: 10 bis 140 MPa, Amplitude: 6 bis 12 MPa, Anstiegsgeschwindigkeit: 40 bis 50 MPa/s,
- Verformung der Gummiteilchen: 130 bis 170% der Grenze der elastischen Komponente,
- Temperatur der Zerkleinerung: 210 bis 240°C, Geschwindigkeit der Temperaturerhöhung: 70 bis 90°C/s,
- Abnahme der Volumenspannung mit der Geschwindigkeit von 30 bis 40 MPa/s.

Das mit Modifikator hergestellte Gummipulver besteht aus 84% Teilchen mit der Größe von 0,1 bis 0,8 mm und 16% Teilchen mit der Größe von 0,81 bis 1,25 mm und das ohne Modifikator hergestellte Gummis pulver besteht aus 79% Teilchen mit der Größe von 0,1 bis 0,8 mm und 11% Teilchen mit der Größe von 0,81 bis 1,45 mm.

Die Fraktion des aktiven Gummipulvers mit der Teilchengröße bis zu 0,8 mm wurde zur Herstellung von Recycling-Gummis durch Vormischen des Pulvers mit der Rohgummimischung auf der Basis von Ethylen-Propylenkautschuk verwendet, welche für die Herstellung von gummitechnischen Artikeln bestimmt war.

In der Tabelle 2.1 sind technische Daten des Prozesses zur Herstellung des aktiven Gummipulvers und dessen spezifische geometrische Fläche angeführt.

Tabelle 2.1

| Ausgangs-<material | spezifischer Energieaufwand für die Pulverherstellung kWh/t | | spezifische geometrische Fläche des Pulvers $m^2$/g | |
|---|---|---|---|---|
| | Ohne Modifikator | mit Modifikator | ohne Modifikator | mit Modifikator |
| Abfälle von gumriitech-nischen Artikeln | 400 | 370 | 0,75 | 1,05 |

In der Tabelle 2.2 sind physisch-mechanische Eigenschaften der Gummis auf der Basis von Ethylen-Propylenkautschuk angeführt, welche das mit oder ohne Modifikator hergestellte Gummipulver enthalten.

Tabelle 2.2

| Kennwerte | Anzahl der AGP-Masseteile je 100 Masseteile der Kautschukphase | | | | | | | | |
|---|---|---|---|---|---|---|---|---|---|
| | AGP-Typ | | | | | | | | |
| | AGP unmodifiziert | | | | | AGP modifiziert | | | |
| Plastizität, vereinbarte Einh. | 0 | 5 | 10 | 20 | 40 | 5 | 10 | 20 | 40 |
| | 0,52 | 0,52 | 0,50 | 0,50 | 0,52 | 0,54 | 0,56 | 0,56 | 0,54 |
| Bed. Zug-festigkeit, MPa | 160 | 165 | 168 | 170 | 155 | 170 | 172 | 176 | 170 |
| Relative Dehnung, % | 280 | 286 | 284 | 284 | 280 | 296 | 296 | 290 | 284 |
| Prall-elastizität, % | 36 | 38 | 38 | 40 | 38 | 38 | 40 | 42 | 42 |

Wie den vorgelegten Ergebnissen entnehmbar ist, ermöglicht es das erfindungcgemäße Verfahren, Gummimischungen auf der Basis von Ethylen-Propylenkautschuken zu erhalten, die bis zu 40 Masseteilen des Pulvers enthalten, ohne wesentliche technologische und technische Eigenschaften zu beeinträchtigen.

Beispiel 3

Die Abfälle gummitechnischer Artikel aus Gummis auf der Basis von Fluorkautschuk - Vinylidenfluorid-Trichlorfluorethylen-Copolymer - mit der Teilchengröße bis zu 15 mm werden einer Zerkleinerung im beschriebenen Apparat in Anwesenheit des Modifikators mit folgenden Betriebsparametern unterzogen:

- Anstieg der Volumenspannung: 10 bis 190 MPa, Amplitude: 10 bis 16 MPa, Anstiegsgeschwindigkeit: 40 bis 70 MPa/s, der elastischen Komponente,
- Temperatur der Zerkleinerung: 240 bis 270°C, Geschwindigkeit der Temperaturerhöhung: 90 bis 125°C/s,
- Abnahme der Volumenspannung mit der Geschwindigkeit von 60 bis 80 MPa/s.

Die Fraktion des aktiven Gummipulvers mit der Teilchengröße bis zu 0,8 mm wurde zur Einführung in die Gummimischung folgender Zusammensetzung in einer Menge von 5 bis 15 Masseteilen verwendet:

- SKF-32*: 100 Masseteile,
- Kupfer-Salizylalimin: 5 Masseteile,
- Zinkweiss: 5 Masseteile,
- technischer Kohlenstoff $\pi$-701: 30 Masseteile,
- Kalziumstearat: 5 Masseteile.

Technische Eigenschaften der Versuchsgummis sind in der Tabelle 3.1 angeführt.

Tabelle 3.1

| Muster | Bed. Zugfestigkeit, MPa | Relat. Dehnung, % | Restdehnung, % | Shore-A-Härte, vereinbarte Einheiten | Änderungen der relat. Dehnung bei 200%, 72 h, % | Relat. Druckverformung, Verformung 20%, 150°C, 24 h | Änderung der Masse SZR-1 23°C, 24 h, % |
|---|---|---|---|---|---|---|---|
| Ausgangsmuster | 25,5 | 105 | 2 | 80 | -50,9 | 62,8 | 2,5 |
| Ausgangsmuster +5 Masseteile des Pulvers | 20,5 | 95 | 4 | 82 | -49,4 | 65, 0 | 1,5 |
| Ausgangsmuster +10 Masseteile des Pulvers | 23,5 | 120 | 5 | 81 | -48,3 | 66,7 | 1,6 |
| Ausgangsmuster +15 Masseteile des Pulvers | 22,0 | 115 | 6 | 78 | -41,5 | 61,1 | 1,5 |
| Norm gemäß der normativtechnischen Dokumentation | nicht minder als 20 | nicht minder als 90 | nicht mehr als 10 | 76-86 | -65+25 | nicht mehr als 70 | 0-3,5 |
| * SKF-32: Vinylidenfluorid-Trichlorfluorethylen-Copolymer. | | | | | | | |

EP 1 362 681 B1

Wie aus den vorgelegten Ergebnissen ersichtlich ist, ändert die Einführung des aus den Gummis auf der Basis von Fluorkautschuk hergestellten aktiven Gummipulvers ins primäre Ausgangsgummi in der Menge bis zu 15 Masseteilen dessen technischen Eigenschaften nicht.

Beispiele 4 bis 10

Die Verfahren wurden ähnlich den Beispielen 1 und 2 durchgeführt. Zusätzlich wurden jedoch 20 bis 40% der Abfälle von Hoch- und Niederdruckpolyethylen und Polypropylen eingeführt. Es wurde ein Mischmaterial mit Anstieg der Volumenspannung von 15 bis 200 MPa, Amplitude von 12 bis 16 MPa, Anstiegsgeschwindigkeit von 50 bis 60 MPa/s, Temperatur von 180 bis 230°C, Geschwindigkeit der Temperaturerhöhung von 100 bis 110°C/s und Größen der Volumenspannung, die eine Verformung der Gummiteilchen von 115 bis 175% der Grenze der elastischen Komponente der Verformung der Ausgangsgummis hervorrufen, und Abnahme der Volumenspannung mit der Geschwindigkeit von 70 bis 90 MPa/s erhalten. Die Anwesenheit des Modifikators ist obligatorisch. Die erhaltenen Mischpulver bestanden aus 82 bis 94% der Teilchen mit der Größe bis zu 0,8 mm. Weiter wurden diese Pulver mittels eines Extrusions- oder Kalanderverfahren bei Temperaturen von 190 bis 240°C behandelt, um plattenförmige thermoplastische Werkstoffe zu erhalten, deren Eigenschaften in der Tabelle 4.1 angeführt sind.

Tabelle 4.1

| Beispiels -Nr. | Material | Physisch-mechanische Kennwerte | | | |
|---|---|---|---|---|---|
| | | Bed. Zugfestigkeit, MPa | Relative Dehnung, % | Shore-A-Härte, vereinbarten Einheiten | Reiss- festigkeit, MPa |
| 1 | Altreif enguniini + 40% Abfälle von Hochdruckpolyethylen | 26,5 | 450 | 68 | 12,6 |
| 2 | Altreifengummi + 20% Abfälle von Niederdruckpolyethylen | 24,8 | 400 | 70 | 11,8 |
| 3 | Altreifengummi + 20% Abfälle von Polypropylen | 25,4 | 220 | 84 | 13,6 |
| 4 | Altreifengummi + 40% Abfälle von Polypropylen | 29,2 | 180 | 88 | 14,8 |
| 5 | Gummiabfälle auf der Basis von Ethylen-Propylenkautschuk + 40% Abfälle von Hochdruckpolyethylen | 26,2 | 380 | 72 | 8,9 |
| 6 | Gummiabfälle auf der Basis von Ethylen-Propylenkautschuk + 40% Abfälle von Niederdruckpolyethylen | 26, 8 | 260 | 84 | 9,2 |
| 7 | Gummiabfälle auf der Basis von Ethylen-Propylenkautschuk + 20% Abfälle von Polypropylen | 28,0 | 210 | 82 | 9,1 |

Beispiel 11

Die Abfälle gummitechnischer Artikel aus Gummis auf der Basis von Ethylen-Propylenkautschuk mit der Teilchengröße von 10 bis 20 mm werden einer Zerkleinerung im Apparat mit folgenden Betriebsparametern unterzogen, wobei die Arbeitsflächen dessen Hülsen mit fluororganischen Alkohol-Telomeren behandelt und mit Wolframkarbid mit einer Unterlage beschichtet sind, die Kobalt mit einer Gesamtdicke von 0,3 ± 0,1 mm enthält:

- Anstieg der Volumenspannung: 20 bis 120 MPa, Amplitude: 8 bis 12 MPa, Anstiegsgeschwindigkeit: 50 ± 5 MPa/s,
- Temperatur der Zerkleinerung: 200 bis 215°C, Geschwindigkeit der Temperaturerhöhung: 60 bis 75°C/s,
- Abnahme der Volumenspannung mit der Geschwindigkeit von 20 bis 30 MPa/s.

| Ausgangs-material | Leistungsauf-nahme des Mo-tors, kW | Leistungsfähig-keit, kg/h | Menge des Gummipulvers mit der Teil-chengröße weniger als 0,8 mm |
|---|---|---|---|
| Abfälle gummite-chnischer Artikel | Ohne Behandlung | der Arbeitsflächen | der Hülsen |
| | 67 bis 70 | 160 bis 165 | 64 bis 66 |
| auf der Basis von | Mit Behandlung | der Arbeitsflächen | der Hülsen |
| Ethylen-Propylenkautschuk | 55 bis 60 | 210 bis 225 | 72 bis 75 |

**Patentansprüche**

1. Verfahren zur Herstellung eines hochaktiven Gummipulvers mit einer spezifischen geometrischen Fläche von 0,4 bis 5 m$^2$/g aus Altreifen und vulkanisierten Abfällen gummitechnischer Artikel auf der Basis von verschiedenen Kautschuken in einem Apparat vom Extrusionstyp bei thermomechanischer Einwirkung, **dadurch gekennzeichnet, daß** die Zerkleinerung von vulkanisierten Gummis in zwei Stufen erfolgt:

   - unter den Bedingungen einer mit einer Geschwindigkeit von 5 bis 90 MPa/s zunehmenden, mit einer Amplitude ± 5 bis 20 MPa und einer Frequenz von 5 bis 600 Hz pulsierenden Volumenspannung von 15 bis 250 MPa, sowie einer mit einer Geschwindigkeit von 50 bis 150°C/s zunehmenden Temperatur im Bereich von 90 bis 380°C bei gleichzeitiger Gassättigung von Gummi mit Abbauprodukten von Plastifizierungsmitteln und anderen zur Gummizusammensetzung gehörenden Bestandteilen erfolgt zunächst deren Feinzerkleinerung unter Bildung einer porigen Struktur im Volumen der Teilchen,
   - bei einer starken Herabsetzung der Volumenspannung mit einer Geschwindigkeit von 50 bis 150 MPa/s zerstört sich dann die porige Struktur, vergrößert sich die spezifische geometrische Fläche der Gummiteilchen und die Teilchen gekühlt werden.

2. Verfahren nach Anspruch 1, **dadurch gekennzeichnet, daß** Abfälle gummitechnischer Artikel und Altreifen auf der Basis von Isopren-, Butadien-, Butadienstyrol-, Butadiennitrilkautschuken, darunter hydrierten, Karboxylat-, Ethylen-Propylen-, Fluor-, Fluorsilikon-, Butadienvinylpyridin-, Silikon-, Epichlorhydrin-, Polychloropren-, chlorsulfonierten, Polyisobutylen-, Akrylatkautschuken sowie deren Mischungen verwendet werden.

3. Verfahren nach Anspruch 1 oder 2, **dadurch gekennzeichnet, daß** zu deren Zerstörung eine Verformung von vulkanisierten Gummistücken im Bereich von 105 bis 250% der Grenze der elastischen Komponente der Gummiverformung unter gleichzeitiger Herabsetzung der Temperatur mit einer Geschwindigkeit von 70 bis 150°C/s durchgeführt wird.

4. Verfahren nach den Ansprüchen 1 bis 3, **dadurch gekennzeichnet, daß** zur starken Vergrößerung der spezifischen geometrischen Fläche des Gummipulvers um 15 bis 40% Modifikatoren der Homogenität eingeführt werden, nämlich Alkoholtelomere der Formel H(CF$_2$-CF$_2$)$_n$-CH$_2$OH, wo n > 4 ist, N-Nitrosodiphenylamin, N-Zyklohexylthiophthalimid in einer Menge von 0,1 bis 1,9%, die es ermöglichen auch, die Leistung der Anlage um 10 bis 55% und die Lagerungszeit des Pulvers bis zu 6-9 Monaten zu vergrößern sowie die Zusammenbackenfähigkeit beim Transport zu vermeiden.

5. Verfahren nach den Ansprüchen 1 bis 4, **dadurch gekennzeichnet, daß** zur Herstellung eines hochaktiven Gummis aus Abfällen von Gummis, in deren Zusammensetzung bei hohen Temperaturen abbaubare Bestandteile fehlen, Modifikatoren - Alkoholtelomere, Sulfenamid M, Sulfenamid Z, Stearin-, Olein-, Zitronen- und Oxalsäure - in einer Menge von 0,2 bis 5,0% eingeführt werden, die mit Gummis zusammengefügt werden und bei einer Temperatur von 70 bis 120°C flüchtige Stoffe bilden.

6. Verfahren nach den Ansprüchen 1 bis 5, **dadurch gekennzeichnet, daß** zur Herstellung von Mischthermoelastoplasten eine gemeinsame Zerkleinerung von Abfällen gummitechnischer Artikel und Abfällen von Thermoplasten und/oder Thermoelastoplasten, nämlich Polyethylenen, Polypropylenen, Polyvinylchloriden, Polyethylenterephthalaten, Butadien-Styrol-Blockcopolymeren usw. erfolgt.

7. Einrichtung zur Herstellung hochaktiver Gummipulver aus Altreifen und Abfällen gummitechnischer Artikel, die ein mit einem Belade- (2) und einem Entladestutzen (3) versehenes zylindrisches Gehäuse (1) aufweist, innerhalb dessen eine Verdichtungs- und eine Zerkleinerungszone gebildet sind, die je eine Verdichtungsschnecke (6) mit einer in Richtung der Zerkleinerungszone abnehmenden Tiefe von Rillen zwischen Kämmen und einer Aktivator (4) in Form eines Rotationskörpers aufweist, auf dessen Arbeitsaussenfläche Nuten ausgebildet sind, wobei die beiden Elemente sind relativ zur Gehäuseinnenfläche unter Bildung mit dieser eines Ringspaltes koaxial drehbar gelagert, wobei das Gehäuse, die Verdichtungsschnecke (6) und der Aktivator (4) mit Kühlelement (10) versehen sind, **dadurch gekennzeichnet, daß** zwei Zerkleinerungszonen vorgesehen sind, wobei die erste von einer mehrgängigen Verdichtungsschnecke (6) mit einem in Richtung des Entladestutzens (3) abnehmenden Volumen des Zwischenwindungsraumes und von dem diese umgebenden Gehäuse gebildet ist, dessen Innenfläche im Verdichtungsbereich von einer konischen Öffnung mit der Neigung in Richtung des Entladestutzens (3) und von ins Innere eingreifenden 3 bis 6 Rippen des rechteckigen Querschnitts gebildet ist, wobei in der ersten Zerkleinerungsbereich ist die Gehäuseinnenfläche von einer zylindrischen Öffnung mit einem Durchmesser gebildet, der 1,003 bis 1,02 mal größer ist als der Durchmesser der Verdichtungsschnecke (6), wobei in die Gehäuseinnenfläche mit einer Anschnittssteigung, die 0,5 bis 1,5 der Anschnittssteigung der Verdichtungsschnecke (6) entspricht, sind mehrgängige mit 3 bis 50 Gängen schraubenförmige Einschnitte mit einer konstanten Tiefe in der geraden und/oder umgekehrten Richtung eingearbeitet und wobei das Verhältnis der Erstreckungen des Verdichtungsbereiches und des ersten Zerkleinerungsbereiches längs der Drehachse der Schnecke im Bereich von 1:0,5 bzw. 0,5:1 liegt, darüber hinaus sind die genannten Verdichtungs- und Zerkleinerungszonen an austauschbaren lösbaren Hülsen (9) gebildet, die an der Welle bzw. am Gehäuse (1) lagerbar sind, und weisen auf einer Seite der Hülse (9) die genannten Arbeitsflächen und auf der anderen Seite die schraubenförmige Rillen mit einer vergrößerten Oberfläche der Wandungen zum Pumpen eines Kühlelement (10) auf, die zweite Zerkleinerungszone wird von einem Aktivator (4) in Form eines Rotationskörpers und von einer starr daran angeschlossenen Entladeschnecke (5), die mit der Verdichtungsschnecke (6) fluchtend angebracht sind, sowie von einem die beiden umgebenden zylindrischen Gehäuse gebildet, wobei in die Aussenfläche des Aktivators (4) mit einer Steigung, die 1,1 bis 2,5 mal größer ist als die Anschnittsteigung der Verdichtungsschnecke (6), mehrgängige schraubenförmige Einschnitte mit einer konstanten Tiefe in der geraden und umgekehrten Richtung mit der gleichen Steigung und der Gangzahl eingearbeitet sind, auf der Aussenfläche der Entladeschnecke (5) sind mehrgängige schraubenförmige Kämme in der geraden Richtung mit einer Steigung, die 1,15 bis 3,0 mal größer ist als die Anschnittsteigung der Verdichtungsschnecke (6), mit einem in Richtung des Entladestutzens (3) sich vergrößernden Zwischenwindungsraum ausgebildet, wobei die Kämme der Schnecke durchgehend oder durch schraubenförmige Einschnitte in der umgekehrten Richtung mit einer Steigung, die der Anschnittssteigung der Kämme gleich ist, unterbrochen ausgebildet sind, daß die zylindrische den Aktivator (4) und die Entladeschnecke (5) umgebende Gehäuseinnenfläche mit mehrgängigen schraubenförmigen Einschnitten versehen ist, die mit einer Steigung, die 0,5 bis 1,5 mal kleiner ist als die Anschnittsteigung der Einschnitte am Aktivator (4) und der Kämme der Entladeschnecke (5) in der geraden und umgekehrten Richtung, ausgebildet sind, wobei das Verhältnis der Erstreckungen des Aktivators (4) und der Entladeschnecke (5) längs der Drehachse im Bereich von 0,2:1 bis 1:0,3 liegt, darüber hinaus werden die genannten Arbeitsflächen des Aktivators (4) der Entladeschnecke (5) und des Gehäuses an den austauschbaren Hülsen (9) auf der einen Seite und auf der anderen Seite schraubenförmige Kanäle mit einer vergrößerten Oberfläche der Wandungen zum Pumpen der Kühlmediums angeschnitten, wobei die mehrgängigen schraubenförmigen Einschnitte mit einem Halbrundprofil mit einem Radius, der 0,005 bis 0,03 des Durchmessers der Schnecke beträgt, und mit einer Tiefe, die um 5 bis 15% kleiner ist als der Radius, ausgebildet werden und das Verhältnis der Anzahl der Einschnitte in der geraden und umgekehrten Richtung im Bereich von 0,3:1,0 bis 1,0:0,3 liegt.

8. Einrichtung nach Anspruch 7, **dadurch gekennzeichnet, daß** die lösbaren Hülsen (9) des Gehäuses (1) und der Welle ein- oder mehrteilig ausgebildet sind.

9. Einrichtung nach Anspruch 7 oder 8, **dadurch gekennzeichnet, daß** das Gehäuse (1) in Form eines oder mehrerer Teile ausgebidet wird.

10. Einrichtung nach einem der Ansprüche 7 bis 9, **dadurch gekennzeichnet, daß** der Ringspalt zwischen dem Aktivator (4) und der Entladeschnecke (5) und der Gehäuseinnenfläche 1,4 bis 2,5 mal und die Tiefe der mehrgängigen Einschnitte am Gehäuse (1) und Aktivator (4) 2,0 bis 4,5 mal größer ist als der Ringspalt zwischen der Verdichtungsschnecke (6) und der Gehäuseinnenfläche.

11. Einrichtung nach einem der Ansprüche 7 bis 10, **dadurch gekennzeichnet, daß** das Verhältnis der Erstreckungen der ersten und zweiten Zerkleinerungszone längs der Drehachse im Bereich von 0,5 bis 1,2 liegt.

12. Einrichtung nach einem der Ansprüche 1 bis 11, **dadurch gekennzeichnet, daß** die Arbeitsflächen der abnehmbaren Hülsen (9) des Gehäuses (1) und der Welle mit Materialien, die Wolfram, Chrom, Nickel, Bor, Molybdän, sowie Karbide und Nitride von höchstschmelzenden Metallen enthalten, in Anwesenheit von fluororganischen Stoffen behandelt sind.

## Claims

1. Method for the manufacture of a highly active rubber powder with a specific geometrical surface of 0.4 to 5 $m^2$/g from scrap tyres and vulcanized waste of rubber articles based on different rubber types in an extrusion type apparatus under thermomechanical action, **characterized in that** the size reduction of vulcanized rubber takes place in two stages:

   - under the conditions of a pulsating volume strain of 15 to 250 MPa increasing at a rate of 5 to 90 MPa/s, with an amplitude ±5 to 20 MPa and a frequency of 5 to 600 Hz, as well as with a temperature in the range 90 to 380°C increasing at a rate of 50 to 150°C/s accompanied by the simultaneous gas saturation of rubber with degradation products of plasticizing agents and other constituents belonging to the rubber composition, their comminution initially takes place accompanied by the formation of a porous structure in the volume of the particles,

   - in the case of a marked volume strain reduction at a rate of 50 to 150 MPa/s, the porous structure is then destroyed, the specific geometrical surface of the rubber particles is increased and the particles are cooled.

2. Method according to claim 1, **characterized in that** use is made of waste of rubber articles and scrap tyres based on isoprene, butadiene, styrene butadiene, nitrile butadiene rubbers, including hydrogenated carboxylate, ethylene-propylene, fluorine, fluorosilicone, butadiene vinyl pyridine, silicone, epichlorohydrin, polychloroprene, chlorosulphonated, polyisobutylene and acrylate rubbers, as well as mixtures thereof.

3. Method according to claim 1 or 2, **characterized in that** for the destruction thereof there is a deformation of vulcanized rubber pieces in the range 105 to 250% of the limit of the elastic component of rubber deformation, accompanied by a simultaneous temperature reduction at a rate of 70 to 150°C/s.

4. Method according to claims 1 to 3, **characterized in that** for the marked increase of the specific geometrical surface of the rubber powder by 15 to 40% homogeneity modifiers are introduced, namely alcohol telomers of formula H($CH_2$-$CF_2$)$_n$-$CH_2$OH, where n > 4, N-nitrosodiphenylamine, N-cyclohexylthiophthalimide in a quantity of 0.1 to 1.9%, which makes it possible to increase the capacity of the installation by 10 to 55% and the powder storage time up to 6 to 9 months, whilst avoiding caking during transportation.

5. Method according to claims 1 to 4, **characterized in that** for the manufacture of a highly active rubber from rubber waste, whose composition lacks constituents degradable at high temperatures, modifiers - alcohol telomers, sulphenamide M, sulphenamide Z, stearic, oleic, citric and oxalic acid - are introduced in a quantity of 0.2 to 5.0%, combined with rubbers and form volatile substances at a temperature of 70 to 120°C.

6. Method according to claims 1 to 5, **characterized in that** for the manufacture of mixed thermoelastoplastics there is a joint size reduction of waste of rubber articles and waste of thermoplastics and/or thermoelastoplastics, namely polyethylenes, polypropylenes, polyvinyl chlorides, polyethylene terephthalates, styrene-butadiene block copolymers, etc.

7. Apparatus for the manufacture of highly active rubber powders from scrap tyres and waste of rubber articles, which has a cylindrical casing (1) provided with a charging connection (2) and a discharging connection (3) and within which are formed a compacting and size reducing zone, which in each case have a compacting worm (6) with a reduction in the depth of the grooves between the combs decreasing in the direction of the size reducing zone and an activator (4) in the form of a rotating body, on whose outer working surface slots are formed, the two elements are mounted in rotary manner coaxial relative to the casing inner surface accompanied by the formation of an annular clearance with the latter, the casing, the compacting worm (6) and the activator (4) being provided with cooling elements (10), **characterized in that** there are two size reducing zones, the first being formed by a multistart compacting worm (6) with an interturn gap volume decreasing in the direction of the discharge connection (3) and the casing surrounding the same, whose inner surface is formed in the compacting area by a conical opening inclined in the direction of the discharge connection (3) and 3 to 6 ribs with a rectangular cross-section engaging in the interior, where in the first size reducing area the casing inner surface is formed by a cylindrical opening having a diameter which is 1.003 to 1.02 times larger than the diameter of the compacting worm (6) and into the casing inner surface are incorporated with a starting cut pitch 0.5 to 1.5 times the starting cut pitch of the compacting worm (6) helical notches in multistart form with 3 to 50 starts and a constant depth in the straight and/or reverse direction and where the ratio of the extensions of the compacting area and the first size reducing area along the rotation axis of the worm is in the range 1:0.5 or 0.5:1, in addition said compacting and size reducing zones are formed on replaceable, detachable sleeves (9), which are mountable on the shaft or on the casing (1) and have on one side of the sleeve (9) said working surfaces and on the other side the helical grooves with an increased surface of the walls for pumping a cooling element (10), the second size reducing zone being formed by an activator (4) in the form of a rotating body and a discharge worm (5) rigidly connected thereto and fitted in aligned manner with the compacting worm (6), as well as a cylindrical casing surrounding the two means, whilst in the outer surface of the activator (4) are incorporated with a pitch which is 1.1 to 2.5 times greater than the starting cut pitch of the compacting worm (6) multistart, helical notches with a constant depth in the straight and reverse directions with the same pitch and the same number of starts, on the outer surface of the discharge worm (5) are formed multistart, helical combs in the straight direction with a pitch 1.15 to 3.0 times greater than the starting cut pitch of the compacting worm (6) with an interturn gap increasing in the direction of the discharge connection (3), the combs of the worm being constructed continuously or are interrupted by helical notches in the reverse direction with a pitch equal to the starting cut pitch of the combs, that the cylindrical casing inner surface surrounding the activator (4) and the discharge worm (5) is provided with multistart, helical notches constructed with a pitch 0.5 to 1.5 times smaller than the starting cut pitch of the notches on the activator (4) and the combs of the discharge worm (5) in the straight and reverse directions, the ratio of the extensions of the activator (4) and the discharge worm (5) along the rotation axis being in the range 0.2:1 to 1:0.3, said working surfaces of the activator (4), the discharge worm 5) and the casing on the replaceable sleeves (9) on one side and on the other side are cut helical channels with a larger surface area of the walls for pumping the cooling medium, the multistart, helical notches being constructed with a semicircular profile with a radius which is 0.005 to 0.03 times the worm diameter and a depth which is 5 to 15% smaller than the radius, and the ratio of the number of notches in the straight and reverse directions being in the range 0.3:1.0 to 1.0:0.3.

8. Apparatus according to claim 7, **characterized in that** the detachable sleeves (9) of the casing (1) and the shaft are constructed in one or more parts.

9. Apparatus according to claim 7 or 8, **characterized in that** the casing (1) is constructed in the form of one or more parts.

10. Apparatus according to one of the claims 7 to 9, **characterized in that** the annular clearance between the activator (4) and the discharge worm (5) and the casing inner surface is 1.4 to 2.5 times and the depth of the multistart notches on the casing (1) and activator (4) are 2.0 to 4.5 times larger than the annular clearance between the compacting worm (6) and the casing inner surface.

11. Apparatus according to one of the claims 7 to 10, **characterized in that** the ratio of the extensions of the first and second size reducing zones along the rotation axis is in the range 0.5 to 1.2.

12. Apparatus according to one of the claims 1 to 11, **characterized in that** the working surfaces of the removable sleeves (9) of the casing (1) and the shaft are treated with materials containing tungsten, chromium, nickel, boron, molybdenum, as well as carbides and nitrides of very high melting point metals, in the presence of fluoroorganic substances.

## Revendications

1. Procédé pour la fabrication d'une poudre de caoutchouc hautement active ayant une surface géométrique spécifique de 0,4 à 5 m$^2$/g issue de pneumatique usagé et de déchets vulcanisés d'articles en caoutchouc à base de divers caoutchoucs dans un appareil de type extrusion par effet thermomécanique, **caractérisé en ce que** la fragmentation du caoutchouc vulcanisé s'effectue selon deux étapes :

   - dans des conditions de pression volumique pulsatoire de 15 à 250 Mpa dotée d'une amplitude de ± 5 à 20 MPa et d'une fréquence de 5 à 600 Hz, augmentant avec une vitesse de 5 à 90 Mpa/s, ainsi que de température augmentant à une vitesse de 50 à 150° C/c dans une plage allant de 90 à 380° C lors d'une saturation gazeuse simultanée du caoutchouc avec des produits de dégradation des plastifiants et des autres éléments appartenant à la composition du caoutchouc, une fragmentation fine se produit dans un premier temps en générant la formation d'une structure poreuse dans un volume de particules,
   - lors d'une forte réduction de la pression volumique à une vitesse de 50 à 150 Mpa/s, la structure poreuse se détruit alors, la surface géométrique spécifique des particules de caoutchouc augmente et les particules sont refroidies.

2. Procédé selon la revendication 1 **caractérisé en ce que** les déchets des articles en caoutchouc et les pneumatiques usagés à base de caoutchoucs isoprène, de caoutchoucs butadiène, de caoutchoucs butadiène styrol, de caoutchoucs butadiène nitrile, parmi lesquels les caoutchoucs hydrogénés, les caoutchoucs carboxylate, les caoutchoucs fluor éthylène propylène, les caoutchoucs fluor silicone, les caoutchoucs butadiène vinyl-pyridine, les caoutchoucs silicone-épichlorhydrine, les caoutchoucs polychloroprène, les caoutchoucs chlorosulfonés, les caoutchoucs polyisobutylène, les caoutchoucs acrylate ainsi que leurs mélanges sont utilisés.

3. Procédé selon la revendication 1 ou 2, **caractérisé en ce qu'**en vue de leur destruction, une déformation des pièces en caoutchouc vulcanisé est réalisée dans une plage allant de 105 à 250 % de la limite des composants élastiques de la déformation du caoutchouc avec réduction simultanée de la température à une vitesse de 70 à 150° C/s.

4. Procédé selon l'une des revendications 1 à 3, **caractérisé en ce que** des modificateurs d'homogénéité sont introduits à raison de 15 à 40% pour un agrandissement important de la surface géométrique spécifique de la poudre de caoutchouc, à savoir des télomères d'alcools de formule H(CF$_2$-CF$_2$)$_n$ -CH$_2$OH, dans laquelle n est > 4, de la N-nitrosodiphénylamine, de la N-zyclohexylthiophtalimide dans une proportion de 0,1 à 1,9%, qui permettent également d'augmenter la puissance de l'installation de 10 à 55% et d'accroître le temps de stockage de la poudre jusqu'à 6 à 9 mois ainsi que d'éviter l'agglutination lors du transport.

5. Procédé selon l'une des revendications 1 à 4, **caractérisé en ce que** des modificateurs - télomères d'alcool, sulfénamide M, sulfénamide Z, acides stéariques, oléiques, citriques et oxaliques- sont introduits en une quantité de 0,2 à 5,0%, qui sont ajoutés aux caoutchoucs, et qui forment à une température de 70 à 120°C des substances volatiles, pour la fabrication d'un caoutchouc hautement actif issus de déchets de caoutchouc, dans la composition duquel des éléments dégradables manquent à températures élevées.

6. Procédé selon les revendications 1 à 5, **caractérisé en ce qu'**une fragmentation générale des déchets des articles en caoutchouc et des déchets de thermoplastiques et/ou de thermoélastoplastiques, à savoir des polyéthylènes, des polypropylènes, des chlorures polyvinyliques, des térephtalates de polyéthylène, des copolymères blocs butadiène-styrol etc., est effectuée en vue de fabriquer des thermoélastoplastiques mixtes.

7. Dispositif pour la fabrication d'une poudre de caoutchouc hautement active à partir de pneumatiques usagés et de déchets d'articles en caoutchouc, qui présentent un boîtier cylindrique (1) pourvu d'une tubulure de chargement (2) et de déchargement (3), à l'intérieur duquel sont constituées une zone de compactage et une zone de fragmentation qui présentent chacune une vis de compactage (6) avec une profondeur de rainures diminuant dans le sens de la zone de fragmentation entre des peignes et un activateur (4) ayant la forme d'un corps de révolution, à la surface utile externe duquel sont formés de rainures, dans lequel les deux éléments sont positionnés de façon coaxiale et rotative par rapport à la surface interne du boîtier pour former avec celle-ci un sillon annulaire, dans lequel le boîtier, la vis de compactage (6) et l'activateur (4) sont pourvus d'éléments réfrigérant (10), **caractérisé en ce que** deux zones de fragmentation sont prévues, la première étant formée par une vis de compactage (6) à pas multiples avec un volume de la chambre à spire intermédiaire diminuant en direction de la tubulure de déchargement (3) et par le boîtier entourant cette zone, dont la surface interne est formée dans la zone de compactage par une ouverture conique avec une inclinaison en direction de la tubulure de déchargement (3) et par 3 à 6 nervures engrenant à l'intérieur de la section transversale à angle droit, dans lequel la surface interne du boîtier est formée dans la première zone de fragmentation par une ouverture cylindrique dotée d'un diamètre, qui est de 1,003 à 1,02 fois supérieur au diamètre de la vis de compactage (6), où des crans à plusieurs pas, en forme de vis, dotés de 3 à 50 pas et présentant une profondeur constante dans le sens de l'avancée et/ou du retour sont pratiqués dans la surface interne du boîtier pourvue d'un pas profilé, qui correspond à 0,5 jusqu'à 1,5 du pas profilé de la vis de compactage (6) et où le rapport de prolongation de la zone de compactage et de la première zone de fragmentation se situe le long de l'axe de rotation de la vis dans une plage de 1 : 0,5 à 0,5 : 1, lesdites zones de compactage et de fragmentation sont de ce fait formées au niveau de gaines (9) amovibles et interchangeables, qui peuvent être installés au niveau de l'axe respectivement du boîtier (1) et qui présentent sur un côté de la gaine (9) ladite surface de travail et sur l'autre côté les rainures en forme de vis avec une aire de surface accrue des parois pour les pompes d'un élément de refroidissement (10), la seconde zone de fragmentation est formée par un activateur (4) ayant la forme d'un corps de révolution et par une vis de déchargement (5) raccordée fermement à celui-ci, lesquels sont raccordés en ligne avec la vis de compactage (6), ainsi que par un boîtier cylindrique entourant les deux, où des crans à plusieurs pas, en forme de vis, présentant une profondeur constante dans le sens de l'avancé et/ou du retour sont pratiqués avec le même pas et le même nombre de pas dans la surface extérieure de l'activateur (4) avec un pas qui est de 1,1 à 2,5 fois supérieurs au pas profilé de la vis de compactage (6), sur la surface externe de la vis de déchargement (5) les peignes en forme de vis à plusieurs pas sont formés dans la direction de l'avancée d'un pas qui est de 1,15 à 3,0 fois supérieur au pas profilé de la vis de compactage (6), et d'une chambre à spire intermédiaire augmentant dans la direction de la tubulure de déchargement (3), dans lequel les peignes de la vis sont formés de façon continue ou entrecoupée par des crans en forme de vis dans le sens du retour avec un pas qui est similaire au pas profilé des peignes, **en ce que** la surface interne du boîtier cylindrique entourant l'activateur (4) et la vis de déchargement (5) est pourvu de crans en forme de vis à plusieurs pas, qui sont formés à l'aide d'un pas qui est de 0,5 à 1,5 fois inférieur au pas profilé des crans situés au niveau de l'activateur (4) et des peignes de la vis de déchargement (5) dans le sens de l'avancée et du retour, où le rapport de prolongation de l'activateur (4) et de la vis de déchargement (5) le long de l'axe de rotation se situe dans une plage de 0,2 : 1 à 1 : 0,3, lesdites surfaces utiles de l'activateur (4) de la vis de déchargement (5) et du boîtier étant par ailleurs séparées au niveau des gaines échangeables (9) par les canaux en forme de vis de part et d'autre par une aire de surface accrue pour les pompes du milieu de refroidissement, où les crans en forme de vis à plusieurs pas sont formés selon un profil semi-arrondi ayant un rayon qui s'élève de 0,005 à 0,03 du diamètre de la vis, et une profondeur qui est inférieure de 5 à 15 % au rayon, et le rapport du nombre de crans dans le sens de l'avancé et du retour se situe dans une plage allant de 0,3 : 0,1 à 1,0 : 0,3.

8. Dispositif selon la revendication 7, **caractérisé en ce que** les gaines (9) amovibles du boîtier (1) et de l'axe sont formées d'une ou plusieurs pièces.

9. Dispositif selon la revendication 7 ou 8, **caractérisé en ce que** le boîtier (1) est constitué sous forme d'une ou plusieurs pièces.

10. Dispositif selon l'une quelconque des revendications 7 à 9, **caractérisé en ce que** le sillon annulaire entre l'activateur (4) et la vis de déchargement (5) et la surface interne du boîtier est supérieur de 1,4 à 2,5 fois et la profondeur des crans à plusieurs pas au niveau du boîtier (1) et de l'activateur (4) de 2,0 à 4,5 fois de celle du sillon annulaire entre la vis de compactage (6) et la surface interne du boîtier.

11. Dispositif selon l'une des revendications 7 à 10, **caractérisé en ce que** le rapport de prolongations de la première et de la seconde zone de fragmentation se situe le long de l'axe de rotation dans une plage de 0,5 à 1,2.

12. Dispositif selon l'une des revendications 1 à 11 **caractérisé en ce que** les surfaces utiles des gaines amovibles (9) du boîtier (1) et de l'axe sont traitées en présence de substances fluoro-organiques avec des matériaux, qui contiennent du tungstène, du chrome, du nickel, du bore, du molybdène ainsi que des carbures et des nitrures de métaux dont le point de fusion est des plus élevés.

Fig. 1. Ausbildung der porigen Struktur in der Anfangsphase der Herabsetzung der Volumenspannung bei der Zerkleinerung von Reifengummi

Fig. 2. Ausbildung von Mikrorissen durch Zerreissen der Poren beim starken Herabsetzen der Volumenspannungen bei der Zerkleinerung von Reifengummi

Fig. 3.